Europäisches Patentamt

European Patent Office

Office européen des brevets

(11) Numéro de publication : **0 465 382 A1**

# (12) DEMANDE DE BREVET EUROPEEN

(21) Numéro de dépôt : **91420206.4**

(22) Date de dépôt : **20.06.91**

(51) Int. Cl.$^5$ : **D04H 3/12,** D04H 3/03, D04H 5/02, B29C 67/14, // B29K105/08

(30) Priorité : **02.07.90 FR 9008579**

(43) Date de publication de la demande : **08.01.92 Bulletin 92/02**

(84) Etats contractants désignés : **BE DE GB IT NL**

(71) Demandeur : **ETABLISSEMENTS LES FILS D'AUGUSTE CHOMARAT & CIE. Société Anonyme 7, rue Roy F-75008 Paris (FR)**

(72) Inventeur : **Chomarat, Gilbert Route des Clarines F-74260 Les Gets (FR)** Inventeur : **Fourezon, André Mariac F-07160 Le Cheylard (FR)**

(74) Mandataire : **Laurent, Michel et al Cabinet LAURENT et CHARRAS, 20, rue Louis Chirpaz B.P. 32 F-69131 Ecully Cedex (FR)**

(54) Structure textile permettant de réaliser des articles stratifiés plats ou en forme.

(57) Structure textile permettant de réaliser des articles stratifiés plats ou en forme.

Elle se caractérise en ce qu'elle se présente sous la forme d'une nappe comportant, d'une part, la matière textile destinée à donner les caractéristiques mécaniques à l'article stratifié formé et, d'autre part, le matériau thermoplastique destiné à former la matrice dudit stratifié, cette structure textile se présentant sous la forme d'une nappe non tissée conventionnelle, constituée de filaments disposés au hasard à l'intérieur de ladite nappe, imbriqués les uns dans les autres, au moins une partie majoritaire en poids de ces filaments étant des filaments synthétiques à base de matière thermoplastique, l'autre partie, minoritaire en poids, étant constituée de filaments conventionnels pour le renforcement des stratifiés, tels que filaments de verre, graphites, métal, polyamide aromatique.. .

EP 0 465 382 A1

La présente invention a trait à un nouveau type de structure textile permettant de réaliser des articles stratifiés plats ou en forme, c'est-à-dire des articles à base d'une résine renforcée par des filaments ou fibres.

Les articles stratifiés à base de résines synthétiques ont été développés depuis fort longtemps.

Comme résines synthétiques permettant la réalisation de tels matériaux, on utilise soit des résines thermodurcissables (les plus utilisées à ce jour) et qui sont des résines liquides constituées par des produits à masse moléculaire faible, polymérisées ou condensées dans des conditions déterminées de température et de catalyse, soit des résines thermoplastiques, tels que polyamide, polypropylène, polytéréphtalate d'éthylène, polytéréphtalate de butylène, polystyrène, polycarbonate ...

La présente invention vise à réaliser les matériaux stratifiés de ce dernier type.

Pour réaliser des matériaux stratifiés à base de résines thermoplastiques, la solution la plus répandue consiste à incorporer à la résine, préalablement au moulage, des fibres courtes (entre cinq et dix millimètres), et à conditionner le mélange ainsi réalisé sous forme de granulés, le moulage étant réalisé à partir de ces granulés par injection à haute pression. Une telle solution nécessite pour sa mise en oeuvre des pressions élevées, ne permet pas d'avoir des structures comportant des éléments fibreux de renforcement de grande longueur, et ne permet en général que d'obtenir des articles de surface limitée et d'épaisseur relativement importante.

Il a également été proposé, comme cela ressort des brevets britanniques GB-A-2 096 195 et GB-A-2 140 837, de réaliser des articles stratifiés à partir d'une nappe non tissée comportant un mélange de fibres discontinues, tel qu'un mélange de fibres de verre et de fibres thermoplastiques pouvant être transformées en une structure rigide par un traitement thermique ultérieur. De tels articles ne donnent cependant pas entière satisfaction compte tenu qu'ils ne comportent qu'une partie minoritaire de matière thermoplastique (le brevet britannique 2 096 195 indique notamment page 3 lignes 79 à 83 que la nappe comporte environ 2 à 30 % en poids de fibres thermoplastiques et de préférence 15 %). Par ailleurs, la réalisation de telles nappes à partir de fibres discontinues est complexe à réaliser (transformation de filaments continus en fibres discontinues, mélange des différents types de fibres).

Une autre solution, proposée depuis quelques années (voir notamment FR-A-2 548 084, 2 562 467, 2 579 133), consiste à incorporer des grains de poudre de matière thermoplastique au coeur d'une mèche de fibres continues et à réaliser la structure stratifiée directement à partir de telles mèches, en provoquant la fusion de la matrice thermoplastique. Une telle solution séduisante est cependant d'une grande complexité et si l'on veut obtenir une structure de renforcement ayant une grande surface, il est nécessaire de transformer les mèches ainsi chargées de grains de poudre de matière plastique en une structure textile plane, nécessitant donc une opération ultérieure telle que par exemple un tissage.

Or on a trouvé, et c'est ce qui fait l'objet de la présente invention, un matériau simple à réaliser, pouvant se présenter sous la forme d'une nappe de grandes longueur et largeur, produit à grande vitesse, qui permet de réaliser des articles stratifiés à base de résines thermoplastiques, qui surmonte les inconvénients des solutions antérieures.

D'une manière générale, l'invention concerne donc une nouvelle structure textile en forme de nappe comportant, d'une part, la matière textile destinée à donner les caractéristiques mécaniques à l'article stratifié formé et, d'autre part, le matériau thermoplastique destiné à former la matrice dudit stratifié. Elle se caractérise en ce que ledit matériau se présente sous la forme d'une nappe non tissée conventionnelle, constituée de filaments disposés au hasard à l'intérieur de ladite nappe, imbriqués les uns dans les autres, au moins une partie majoritaire (en poids) de ces filaments étant des filaments synthétiques à base de matière thermoplastique, l'autre partie, minoritaire en poids, étant constituée de filaments conventionnels pour le renforcement des stratifiés, tels que filaments de verre, graphites, métal, polyamide aromatique...

Avantageusement, les filaments thermoplastiques représentent, en pourcentage en poids, de 70 à 60 % du poids de la nappe non tissée mixte formée, les filaments de renfort (verre par exemple) formant la partie complémentaire.

La liaison de la nappe mixte ainsi formée est obtenue de préférence en la soumettant à un traitement d'aiguilletage conventionnel, cet aiguilletage étant effectué :

– soit de manière à ne pas briser les filaments constituant la nappe, notamment lorsque l'on souhaite réaliser un stratifié en forme de plaque plane, auquel cas, on peut utiliser un aiguilletage faisant appel de préférence à des jets de fluide (air, eau) ;

– soit au contraire, lorsque l'on souhaite par exemple améliorer les caractéristiques de déformation de la nappe formée pour réaliser des structures stratifiées de forme complexe, on réalisera de préférence un aiguilletage poussé au moyen d'aiguilles à barbes, permettant de briser les filaments continus.

Si une telle nappe non tissée peut être utilisée seule, il est évident lorsque l'on souhaite réaliser des stratifiés épais, que l'on peut superposer plusieurs nappes ainsi formées jusqu'à l'épaisseur souhaitée, la superposition pouvant être faite en entrecroisant les nappes entre elles ; on pourra également associer à une ou plusieurs nappes du type conforme à l'invention d'autres structures textiles (tel que par exemple un renfort additionnel constitué d'une nappe de filaments continus orientés, d'un tissu bidirectionnel ..).

Pour la réalisation du matériau conforme à l'invention, on utilisera une installation de type connu telle que celle ressortant du brevet US 3 044 146 (figure 1) ou du brevet britannique 932 482, de telles installations permettant, d'une manière générale, de réaliser une structure non tissée à partir de filaments continus (provenant soit d'une mèche filamentaire préalablement formée, soit directement à la sortie de l'ensemble de formation des filaments) et qui permet :

– d'amener sous tension le faisceau de filaments soit au moyen d'un jet d'aspiration (brevet britannique), soit au moyen d'un ensemble délivreur approprié (brevet US 3 044 146 - élément référencé 12) ;

– de séparer les filaments individuels dudit faisceau, par exemple soit au moyen d'une surface déflectrice (US 3 044 146), soit en chargeant les filaments électrostatiquement (brevet britannique) ou en mettant en oeuvre tout autre moyen bien connu des techniciens pour la réalisation des nappes non tissées à partir des filaments multifilamentaires continus, tels que des déflecteurs oscillants, fixes, de forme concave ou convex plane ;

– de récupérer le faisceau ouvert sur une surface de réception constituée par un tapis transporteur soumis de préférence à une source d'aspiration, de telle sorte que les filaments se répartissent de manière désordonnée, dans toutes les directions et sur une grande largeur à ladite surface puis ;

– de donner de la cohésion à la nappe ainsi formée en la soumettant par exemple à un traitement d'aiguilletage et/ou à un calandrage.

Pour réaliser le matériau conforme à l'invention, on délivre simultanément (par exemple au moyen d'une buse d'aspiration), deux faisceaux de filaments, l'un constitué d'une matière thermoplastique (polyéthylène par exemple) et qui, après traitement de la nappe, formera la matrice, l'autre à base de filaments destinés à constituer le renfort, constitué par exemple de filaments de verre.

Le pourcentage en poids entre les deux types de filaments entrant dans le matériau, sera en général de l'orde de 60 à 70 % en ce qui concerne les filaments thermoplastiques et de 40 à 30 % en ce qui concerne les filaments de renfort (verre). Une telle proportion pourrait être modifiée en fonction des applications envisagées.

Par ailleurs, il pourrait être envisagé d'incorporer à l'intérieur de la nappe non tissée au cours de sa formation des fils de renfort additionnels, par exemple d'amener sur le tapis transporteur sur lequel les filaments sont disposés, une nappe de filaments continus, voire même un non-tissé, un tissu léger, une grille.

Il pourrait également être envisagé non pas d'amener simultanément les filaments thermoplastiques et les filaments de renfort sur le tapis au moyen d'un seul et même système délivreur, mais de délivrer lesdits filaments au moyen d'éléments indépendants permettant un dépôt sous forme de couches successives sur le tapis récepteur ; dans un tel cas, il sera cependant préférable de réaliser une superposition telle que la nappe de filaments destinée à former le renfort, se trouve emprisonnée entre deux nappes de filaments thermoplastiques.

Par ailleurs, la nappe complexe ainsi réalisée pourrait être utilisée comme élément de base dans des complexes obtenus notamment selon les techniques de couture/ tricotage, permettant ainsi d'associer à la nappe formée des fils additionnels aussi bien dans le sens long que dans le sens travers, pouvant être soit des fils thermoplastiques, soit des fils destinés à former le renfort, soit une combinaison de tels éléments.

## Revendications

**1/** Structure textile permettant de réaliser des articles stratifiés plats ou en forme, se présentant sous la forme d'une nappe non tissée comportant, d'une part, la matière textile destinée à donner les caractéristiques mécaniques à l'article stratifié formé et, d'autre part, le matériau thermoplastique destiné à former la matrice dudit stratifié, caractérisée en ce que ladite nappe est constituée de filaments continus disposés au hasard et imbriqués les uns dans les autres, au moins une partie majoritaire en poids de ces filaments étant des filaments synthétiques à base de matière thermoplastique, l'autre partie, minoritaire en poids, étant constituée de filaments conventionnels pour le renforcement des stratifiés, tels que filaments de verre, graphites, métal, polyamide aromatique .. .

**2/** Structure textile selon la revendication 1, caractérisée en ce que les filaments thermoplastiques sont des filaments de polyéthylène représentant en pourcentage en poids de 70 à 60 % du poids de la nappe non tissée mixte formée, les filaments de renfort étant des filaments de verre formant la partie complémentaire.

**3/** Structure textile selon l'une des revendications 1 et 2, caractérisée en ce qu'elle est soumise après réalisation, à un traitement permettant de lui donner de la cohésion.

**4/** Structure textile selon la revendication 3, caractérisée en ce que le traitement de cohésion est un traitement d'aiguilletage ne brisant pas les filaments constituant la nappe, de préférence un traitement d'aiguilletage par jet de fluide.

**5/** Structure textile selon la revendication 3, caractérisée en ce que le traitement de liaison est un traitement d'aiguilletage poussé, brisant les filaments continus constituant la nappe, et plus particulièrement adapté pour la réalisation de structures stratifiées de forme complexe, notamment par emboutissage.

**Office européen des brevets**

## RAPPORT DE RECHERCHE EUROPEENNE

Numero de la demande

EP    91 42 0206

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2096195 (VAN DRESSER) <br> * le document en entier * | 1 | D04H3/12 <br> D04H3/03 <br> D04H5/02 <br> B29C67/14 <br> //B29K105:08 |
| A | | 2, 3, 5 | |
| | --- | | |
| Y | GB-A-2140837 (ALLEN INDUSTRIES) <br> * page 3, lignes 101 - 130; revendications 1, 4, 6, 9, 11 * | 1, 2 | |
| | --- | | |
| Y | EP-A-176847 (HOECHST) <br> * le document en entier * | 1, 2 | |
| | --- | | |
| A | EP-A-315553 (CHOMARAT) <br> * revendications 1, 5, 6, 7 * | 1, 4 | |
| | ----- | | |

**DOMAINES TECHNIQUES RECHERCHES (Int. Cl.5)**

D04H

Le présent rapport a été établi pour toutes les revendications

| Lieu de la recherche | Date d'achèvement de la recherche | Examinateur |
|---|---|---|
| LA HAYE | 16 SEPTEMBRE 1991 | DURAND F.C. |